# FASCICULE DE BREVET EUROPEEN

(11) **EP 3 948 024 B1**
(45) Date de publication et mention de la délivrance du brevet: **04.06.2025**
(21) Numéro de dépôt: 20710055.3
(22) Date de dépôt: 21.02.2020
(51) Int. Cl.: F16H 48/40

(54) **BOÎTIER ET DIFFÉRENTIEL DE TRANSMISSION**
GETRIEBEGEHÄUSE UND DIFFERENTIAL
TRANSMISSION HOUSING AND DIFFERENTIAL

(30) Priorité: 26.03.2019 FR 1903120
(43) Date de publication de la demande: 09.02.2022
(73) Titulaire: NEW H POWERTRAIN HOLDING, S.L.U., 47008 Valladolid (ES)
(72) Inventeur: LE-GALL, Alexandre, 78320 Le Mesnil-Saint-Denis (FR); SLIMANI, Khalid, 94150 Rungis (FR)
(74) Mandataire: Renault Group
(86) Numéro de dépôt international: PCT/EP2020/054596
(87) Numéro de publication internationale: WO 2020/193027

(56) Documents cités:
- EP-A1- 0 911 547
- DE-A1- 102014 202 425
- DE-A1- 4 410 074
- FR-A1- 3 049 323

## Description

La présente invention concerne le domaine des transmissions et de la prise d'information de vitesse sur un élément tournant de transmission, à destination d'une unité de calcul de transmission ou de groupe motopropulseur (GMP).

Elle concerne en particulier l'agencement d'une cible de vitesse sur un différentiel.

Plus précisément, l'invention a pour objet un boîtier de différentiel de transmission de véhicule automobile, comprenant une portée extérieure cylindrique de support d'une couronne de différentiel.

La présente invention a également pour objet un différentiel de transmission comportant une couronne et un boîtier tournant dans un carter.

Dans une transmission, en particulier une transmission hybride, les données relatives à la vitesse ou au régime de rotation de certains des composants tournants, tels qu'un arbre de la boîte de vitesses et/ou la couronne d'un différentiel, sont nécessaires pour piloter avec précision les différentes sources de puissance, thermique et électrique, qui sont reliées à un ensemble commun. II faut en particulier piloter ces sources en couple et/ou en régime, pour réaliser des changements de rapports sans embrayage. Seule une parfaite synchronisation des arbres de boîte, peut assurer la fiabilité, et le confort de passage requis.

Pour disposer d'informations précises sur les régimes de rotation des arbres de la boîte, ou d'autres pièces tournantes, le système de mesure de vitesse est généralement constitué d'un capteur de défilement fixe et d'une cible liée en rotation à une pièce tournante qui défile devant le capteur. La cible se présente généralement sous la forme d'un ensemble de dents réparties sur la circonférence d'une pièce tournante qui est solidaire en rotation du composant dont on désire mesurer le régime.

La prise d'information s'effectue souvent sur la couronne du différentiel. Cette solution, illustrée par la publication FR 3 049 323, permet de connaître directement la vitesse de l'arbre secondaire de la boîte, qui est directement lié à la couronne. La mesure est précise grâce au grand diamètre de la couronne, mis à profit pour implanter les dents de comptage qui défilent devant le capteur fixe.

Selon cette publication, la cible peut être emmanchée et frettée sur la couronne de pont. Toutefois, à l'usage, la cible a tendance à se déformer et à se démancher de la couronne. Des points de soudure sont alors nécessaires pour renforcer la liaison entre la cible et la couronne, et maintenir la cible en position sur celle-ci.

La présente invention vise à s'affranchir de ces contraintes d'assemblage, tout en bénéficiant du diamètre de la couronne de différentiel pour implanter la cible.

Dans ce but, la portée de support de la couronne est surmontée sur un bord, d'un épaulement orthogonal en forme d'anneau, présentant sur sa circonférence une alternance régulière de stries et de nervures d'orientation radiale, dont l'ensemble constitue une cible de mesure de vitesse de rotation du boîtier. Dans un mode de réalisation particulier de l'invention, l'épaulement est issu de fonderie avec le boîtier du différentiel.

La présente invention sera mieux comprise à la lecture de la description suivante d'un mode de réalisation non limitatif de celle-ci, en se reportant aux dessins annexés.
[Fig. 1] est une vue extérieure de boîte de vitesses, avec un capteur de mesure de vitesse.
[Fig. 2] est une vue de boîtier de différentiel à l'intérieur de son carter.
[Fig. 3] est une coupe selon B de la figure 1.

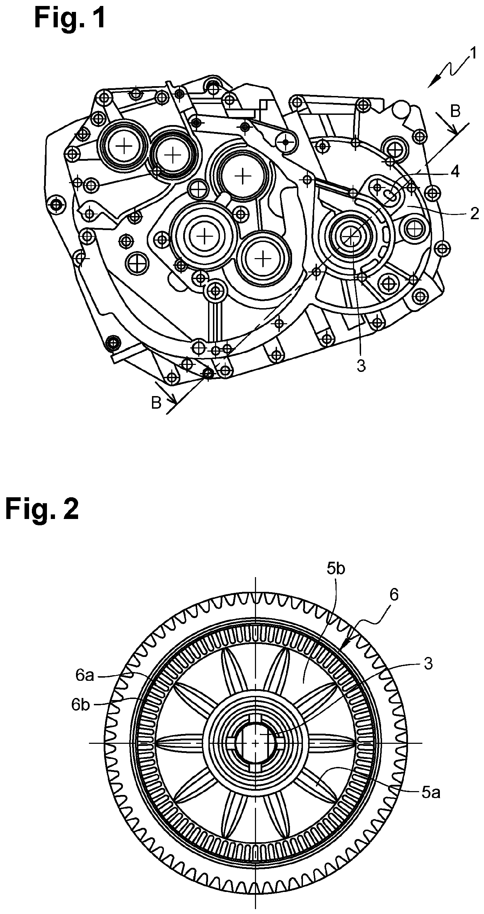

Sur la figure 1, on voit le carter de mécanisme 2 une sortie d'arbre de transmission 3, et l'extrémité d'un capteur de mesure de vitesses 4, faisant saillie à l'extérieur du carter 2.

Sur la figure 2, on voit la sortie d'arbre de transmission 3. Les nervures radiales 5a s'étendant autour de la sortie 3, appartiennent au boîtier de différentiel 5. Elles s'étendent vers l'extérieur, jusqu'à une bande annulaire périphérique du boîtier portant une cible 6 qui coopère avec le capteur 4, pour mesurer la vitesse de rotation du boîtier de différentiel. La cible 6 est constituée d'une alternance régulière de stries 6a et de nervures 6b, orientées radialement, sur une bande annulaire périphérique du boîtier 5, sous la couronne 7.

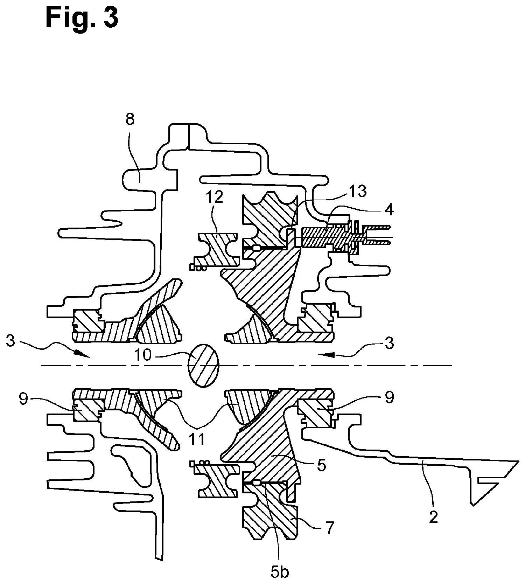

Le boîtier 5 est maintenu à l'intérieur du carter de mécanisme 2 et du carter d'embrayage 8 par des roulements 9. La couronne 7 est fixée à l'extérieur du boîtier 5, sur sa portée extérieure 5b. Sur la figure 3, on voit la portée 5b de support de la couronne 7. A l'intérieur du boîtier 5, on voit l'axe de satellites 10, les deux planétaires 11, et les orifices de sortie 3 des arbres de transmission (non représentés). A l'extérieur du boîtier 5, on a aussi représenté la roue parking 12. Le capteur 4 est fixé dans une ouverture du carter de mécanisme 2. Il fait face à un épaulement 13 du boîtier 5, portant la cible 6, qui défile en tournant devant lui.

La portée de support 5b de la couronne 7 est surmontée sur un bord, d'un épaulement 13 orthogonal en forme d'anneau, présentant sur sa circonférence l'alternance régulière des stries et 6a des nervures 6b d'orientation radiale dont l'ensemble constitue la cible 6. Celle-ci se présente sous la forme une bande annulaire. Dans cet exemple, elle est intégrée dans le boîtier de différentiel, au niveau de l'épaulement 13. Dans cet exemple, il est issu de fonderie avec le boîtier 5, mais sans sortir de l'invention, il peut aussi être réalisé indépendamment du boîtier et rapporté sur celui-ci. L'épaulement 13 est en appui latéral contre la couronne 7. Les nervures 6a et les stries 6b sont usinées dans la matière de l'épaulement 13. Toutefois, sans sortir du cadre de l'invention, la cible peut également être une pièce rapportée sur l'épaulement 13.

Le différentiel de transmission proposé comporte un carter 2, 8 et un boîtier, tel que celui qui est décrit ci-dessus, tournant dans son carter, et défilant avec sa cible 6, devant un capteur fixe 4, monté au travers du carter 2. Les stries 6a et les nervures 6b sont détectées par le capteur 4. Leur vitesse de défilement permet de déterminer la vitesse de rotation du boîtier de différentiel 5 et celle de l'arbre secondaire de la boîte de vitesses.

La largeur et le nombre des dents et des nervures dépend des caractéristiques du capteur, de manière à lui permettre de les compter au passage pour transmettre l'information à son calculateur. L'avantage principal de l'invention, est d'éviter le risque de dé-frettage de la cible, sans avoir besoin de la souder sur la couronne.

## Revendications

1. Boîtier de différentiel (5) pour une transmission de véhicule automobile, comprenant une portée extérieure cylindrique de support (5b) d'une couronne de différentiel (7), **caractérisé en ce que** la portée de support (5b) de la couronne (7) est surmontée sur un bord, d'un épaulement orthogonal (13) en forme d'anneau, présentant sur sa circonférence une alternance régulière de stries (6a) et de nervures (6b) d'orientation radiale, dont l'ensemble constitue une cible de mesure (6) de vitesse de rotation du boîtier (5).

2. Boîtier de différentiel (5) selon la revendication 1, **caractérisé en ce que** l'épaulement (13) est issu de fonderie avec le boîtier (5).

3. Boîtier de différentiel (5) selon la revendication 1 ou 2, **caractérisé en ce que** l'épaulement (13) est destinée à être en appui latéral contre la couronne (7) du différentiel.

4. Boîtier de différentiel (5) selon la revendication 1, 2 ou 3, **caractérisé en ce que** la cible (6) est intégrée dans l'épaulement (13).

5. Boîtier de différentiel selon la revendication 4, **caractérisé en ce que** les stries (6a) et les nervures (6b) sont usinées dans la matière de l'épaulement (13).

6. Différentiel de transmission comportant un carter (2) et un boîtier (5) conforme à l'une des revendications précédentes tournant dans son carter (2), **caractérisé en ce que** la cible (6) du boîtier (5) défile devant un capteur fixe (4), monté au travers du carter (2) lorsque le boitier est en rotation.

## Patentansprüche

1. Differentialkorb (5) für ein Kraftfahrzeuggetriebe, umfassend eine zylindrische äußere Lagerfläche (5b) eines Differentialkranzes (7), **dadurch gekennzeichnet, dass** die Lagerfläche (5b) des Kranzes (7) an einem Rand von einer orthogonalen Schulter (13) in Form eines Rings überlagert wird, aufweisend an ihrem Umfang eine regelmäßige Wechselfolge aus Rillen (6a) und Rippen (6b) mit radialer Ausrichtung, wobei die Anordnung ein Drehzahl-Messtarget (6) des Korbs (5) bildet.

2. Differentialkorb (5) nach Anspruch 1, **dadurch gekennzeichnet, dass** die Schulter (13) einteilig mit dem Korb (5) als Gussteil ausgebildet ist.

3. Differentialkorb (5) nach Anspruch 1 oder 2, **dadurch gekennzeichnet, dass** die Schulter (13) dazu bestimmt ist, in seitlicher Abstützung gegen den Kranz (7) des Differentials zu sein.

4. Differentialkorb (5) nach Anspruch 1, 2 oder 3, **dadurch gekennzeichnet, dass** das Target (6) in die Schulter (13) integriert ist.

5. Differentialkorb nach Anspruch 4, **dadurch gekennzeichnet, dass** die Rillen (6a) und die Rippen (6b) aus dem Werkstoff der Schulter (13) herausgearbeitet sind.

6. Getriebedifferential, umfassend ein Gehäuse (2) und einen Korb (5) nach einem der vorhergehenden Ansprüche, der in seinem Gehäuse (2) umläuft, **dadurch gekennzeichnet, dass** das Target (6) des Korbs (5) vor einem ortsfesten Sensor (4) durchläuft, der quer zum Gehäuse (2) montiert ist, wenn sich der Korb dreht.

## Claims

1. Differential cage (5) for a motor vehicle transmission, comprising a cylindrical external bearing surface (5b) for supporting a differential ring gear (7), **characterized in that** the bearing surface (5b) for supporting the ring gear (7) is surmounted on one edge by an orthogonal shoulder (13) in the shape of an annulus having, on its circumference, a regular alternation of radially oriented striations (6a) and ribs (6b) which together constitute a measurement target (6) for measuring the rotational speed of the cage (5).

2. Differential cage (5) according to Claim 1, **characterized in that** the shoulder (13) is cast into the cage (5).

3. Differential cage (5) according to Claim 1 or 2, **characterized in that** the shoulder (13) is intended to bear laterally against the differential ring gear (7).

4. Differential cage (5) according to Claim 1, 2 or 3, **characterized in that** the target (6) is incorporated into the shoulder (13).

5. Differential cage according to Claim 4, **characterized in that** the striations (6a) and the ribs (6b) are machined into the material of the shoulder (13).

6. Transmission differential comprising a housing (2) and a cage (5) according to one of the preceding claims rotating in its housing (2), **characterized in that** the target (6) of the cage (5) travels past a fixed sensor (4) mounted through the housing (2) when the cage is rotating.
